(19) **Europäisches Patentamt European Patent Office Office européen des brevets**

(11) **EP 4 606 471 A1**

(12) **EUROPEAN PATENT APPLICATION**
published in accordance with Art. 153(4) EPC

(43) Date of publication:
**27.08.2025 Bulletin 2025/35**

(21) Application number: **23880280.5**

(22) Date of filing: **20.10.2023**

(51) International Patent Classification (IPC):
**B01J 20/28** *(2006.01)* **B01J 20/04** *(2006.01)*
**B01J 20/26** *(2006.01)* **B32B 27/12** *(2006.01)*
**B32B 3/26** *(2006.01)* **B32B 7/022** *(2019.01)*
**B32B 7/023** *(2019.01)* **B32B 27/32** *(2006.01)*
**B32B 27/36** *(2006.01)*

(52) Cooperative Patent Classification (CPC):
**B01J 20/04; B01J 20/26; B01J 20/28; B32B 3/26;
B32B 7/022; B32B 7/023; B32B 27/12;
B32B 27/32; B32B 27/36**

(86) International application number:
**PCT/KR2023/016327**

(87) International publication number:
**WO 2024/085705 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.10.2022 KR 20220135456
19.10.2023 KR 20230140527**

(71) Applicant: **Desiccant Co., Ltd.
Daejeon 34027 (KR)**

(72) Inventors:
• **KIM, Woo Taek
Seoul 06634 (KR)**
• **JANG, Kyung Sun
Daejeon 35206 (KR)**
• **JANG, Young Jin
Daejeon 34681 (KR)**
• **LEE, Yong Ho
Daejeon 34050 (KR)**

(74) Representative: **Kraus & Lederer PartGmbB
Thomas-Wimmer-Ring 15
80539 München (DE)**

(54) **GEL-TYPE DESICCANT COMPOSITION AND DESICCANT PACK COMPRISING SAME**

(57)    The present invention provides a gel-type desiccant composition and a desiccant pack comprising same. Specifically, the present invention provides a desiccant pack which comprises, as a gel-type desiccant composition, at least one hygroscopic material selected from the group consisting of magnesium chloride, calcium chloride and sodium carbonate, a hygroscopic polymer and a starch, and which uses a triple-layered plain film as a packaging material for packaging same.

**Description**

[Technical Field]

The present invention relates to a gel-type desiccant composition and a desiccant pack including the same.

[Background Art]

In general, moisture absorption products have been widely used in packaging boxes to protect products from moisture during packaging or transportation of the products, and have also been widely used in products that require humidity control, such as automobile lamps and electronic products.

Silica gel is mainly used as the desiccant, but has the problems of a low moisture absorption ratio and a low moisture absorption rate. Accordingly, a solidified desiccant containing calcium chloride or magnesium chloride has been studied. However, in the case of the solidified desiccant, although a moisture absorption ratio and a moisture absorption rate may be relatively high, a moisture release rate for releasing the absorbed moisture back to the outside is also high; thus, there is a disadvantage in that it is difficult to have a moisture absorption effect for a long period of time. Therefore, although it is intended to suppress the moisture release rate by further adding an improver such as a structural stabilizer, a curable material, or a wax to the solidified desiccant, there is a problem in that it is difficult to suppress the moisture release rate by only changing the composition of the desiccant.

**[Disclosure]**

[Technical Problem]

The present invention provides a gel-type desiccant composition having an improved moisture absorption ratio, moisture absorption rate, and moisture release rate in order to solve the problem caused by the high moisture release rate of the existing solidified desiccant.

In addition, the present invention provides a gel-type desiccant composition having excellent moisture absorption efficiency and moisture release efficiency while reducing cost.

In addition, the present invention provides a gel-type desiccant composition having an improved moisture absorption ratio, moisture absorption rate, and moisture release rate by using a multi-layered packaging material as a packaging material of a desiccant pack including the gel-type desiccant, and a desiccant pack including the same.

[Technical Solution]

In one general aspect, a desiccant composition includes at least one or two or more hygroscopic materials selected from the group consisting of magnesium chloride and sodium carbonate; a hygroscopic polymer; and starch.

According to one aspect of the present invention, the desiccant composition may be gelled when it absorbs moisture.

According to one aspect of the present invention, the desiccant composition may include 1 to 80 parts by weight of the hygroscopic polymer and 1 to 80 parts by weight of the starch with respect to 100 parts by weight of the hygroscopic material.

According to one aspect of the present invention, the desiccant composition may include polyacrylamide-methacrylic acid metal salt.

According to one aspect of the present invention, the starch may include starch, modified starch, or starch obtained by mixing the starch and the modified starch, and in particular, may include phosphate-modified starch.

According to one aspect of the present invention, the desiccant composition may further include an additive.

According to one aspect of the present invention, the desiccant composition may have a moisture absorption ratio of 150% or more when measured at 50°C and 95% relative humidity.

According to one aspect of the present invention, the desiccant composition may have a moisture absorption rate of 2 %/2 hr or more when measured at 50°C and 95% relative humidity.

According to one aspect of the present invention, the desiccant composition may have a percentage of a moisture release amount to a moisture absorption amount of 60% or less, the moisture release amount being measured at 80°C and 30% relative humidity for 24 hr and the moisture absorption amount being measured at 50°C and 95% relative humidity for 14 days.

In another general aspect, a desiccant pack includes the desiccant composition and a packaging material for a desiccant including the desiccant composition.

According to one aspect of the present invention, the packaging material for a desiccant may include a polyester non-woven layer, a breathable polyolefin layer, and a perforated polyolefin-based film layer, each of the layers may further include a polyurethane-based adhesive layer, the perforated polyolefin-based film may have a plurality of perforations, a Gurley permeability of the packaging material for a desiccant may be 100 to 3,000 seconds, and a moisture permeability of the packaging material for a desiccant may be 500 to 5,000 $g/m^2 \cdot 24$ hrs.

According to one aspect of the present invention, the polyurethane-based adhesive may be a polyurethane-based adhesive derived from a polyester-based polyol and a polyether-based polyol.

According to one aspect of the present invention, the perforated polyolefin-based film may be a perforated polyolefin-based film having 1 to 500 perforations/$cm^2$.

According to one aspect of the present invention, the desiccant pack may have a moisture absorption ratio of 25% or more when measured at 50°C and 95% relative humidity.

According to one aspect of the present invention, the desiccant pack may have a moisture absorption rate of 5 %/2 hr or more when measured at 50°C and 95% relative humidity.

According to one aspect of the present invention, the desiccant pack may have a percentage of a moisture release amount to a moisture absorption amount of 20% or less, the moisture release amount being measured at 80°C and 30% relative humidity for 24 hr and the moisture absorption amount being measured at 50°C and 95% relative humidity for 14 days.

[Advantageous Effects]

The gel-type desiccant composition of the present invention has an advantage of suppressing a moisture release rate while having a moisture absorption ratio superior to that of an existing solidified desiccant.

In addition, since a triple-layered plain packaging material of the present invention is included as a packaging material of the gel-type desiccant composition of the present invention, it is possible to maintain a low moisture release rate even under high temperature and low humidity conditions, making it advantageous for long-term transport and storage of automotive lamp desiccants or moisture-sensitive items at room temperature.

[Best Mode]

The present invention will be described in more detail through specific embodiments or examples including the following accompanying drawings. However, the following specific embodiments or examples are only references to explain the present invention in detail, and the present invention is not limited thereto and may be implemented in various forms.

In addition, unless otherwise defined, all the technical terms and scientific terms used have the same meanings as commonly understood by those skilled in the art to which the present invention pertains. The terms used in the description of the present invention are merely used to effectively describe a specific embodiment, but are not intended to limit the present invention.

In addition, unless the context clearly indicates otherwise, singular forms used in the specification and the appended claims may be intended to include plural forms.

In addition, unless explicitly described to the contrary, "comprising" any components will be understood to imply further inclusion of other components rather than the exclusion of any other components.

In addition, the term "and/or" in the present invention includes any one and all combinations of one or more related listed items.

In addition, "hour" in the present invention is the same as "hr".

A conventional solidified desiccant includes a curable material such as magnesium oxide in a hygroscopic material such as calcium chloride, and has a moisture absorption ratio which is better than that of silica gel, but has a problem of re-releasing the absorbed moisture at a high temperature or a low humidity.

The present invention provides a desiccant composition including at least one or more hygroscopic materials selected from the group consisting of magnesium chloride and sodium carbonate; a hygroscopic polymer; and starch, thereby providing a desiccant composition having an excellent moisture absorption ratio and a low moisture release rate.

According to one aspect of the present invention, the desiccant composition may be gelled when it absorbs moisture, such that a desiccant pack is not torn due to an impact, and further, due to the gel properties, the absorbed moisture may be maximally suppressed from being released to the outside of the desiccant. In addition, since the desiccant composition of the present invention does not include a curable inorganic material such as magnesium oxide that may cause solidification, the moisture release rate of the absorbed moisture may be further suppressed compared to a solid-form desiccant composition or a desiccant pack including the same.

In addition, the hygroscopic material may be at least one or more hygroscopic materials selected from the group consisting of magnesium chloride and sodium carbonate, and preferably, may be magnesium chloride. Since the desiccant composition includes the magnesium chloride, the desiccant composition may have a more excellent moisture absorption ratio and moisture absorption rate.

The hygroscopic polymer may be, specifically, one or two or more hygroscopic polymers selected from a polyacrylic acid metal salt, a polyacrylamide- (meth) acrylic acid copolymer, an ethylene maleic anhydride copolymer, a cellulose-based thickener including cross-linked carboxymethyl cellulose, methyl cellulose, ethyl cellulose, hydroxyethyl cellulose, and hydroxypropyl methyl cellulose, a polyvinyl alcohol copolymer, and cross-linked polyethylene oxide. Preferably, hygroscopic polymers that are easily gelled, such as a cross-linked poly(meth)acrylic acid metal salt, a cross-linked polyacrylamide-(meth)acrylic acid copolymer, a cross-linked ethylene maleic anhydride copolymer, and a cross-linked carboxymethyl cellulose, are preferred, and more preferably, a hygroscopic polymer of a cross-linked or non-cross-linked metal salt based on a polyacrylamide-(meth)acrylic acid copolymer has excellent gelation and lower release of absorbed moisture, which is most preferred.

That is, in the case of the desiccant composition obtained by mixing the polyacrylamide-(meth)acrylic acid metal salt, starch, and magnesium chloride, gelation occurs more strongly when moisture is absorbed, and moisture release is suppressed.

A metal in the polyacrylamide-(meth)acrylic acid metal salt may be one or more selected from magnesium, calcium, sodium, potassium, rubidium, and cesium, but is not limited thereto.

A weight average molecular weight of the polyacrylamide- (meth) acrylic acid copolymer may be 10,000 to 20,000,000 g/mol, specifically, 100,000 to 10,000,000 g/mol, specifically, 1,000,000 or more, 3,000,000 or more, or 5,000,000 or more, and specifically, 3,000,000 to 10,000,000 g/mol, but is not limited thereto.

The starch may be normal starch or modified starch, and ionic modified starch is particularly preferred because it is combined with the hygroscopic polymer and hygroscopic material and thus provides more excellent properties. Of course, the starch may be included as a mixture of normal starch and the modified starch.

The normal starch may be one or more selected from tapioca starch, corn starch, potato starch, glyceryl starch, aluminum starch octenyl succinate, and calcium starch octenyl succinate, preferably, may be one or more selected from tapioca starch, corn starch, and potato starch, and specifically, may be corn starch, but is not limited thereto.

In addition, the modified starch may include one or more selected from acid-hydrolyzed starch and acid-treated starch, such as acetylated distarch adipate, acetylated distarch phosphate, starch sodium octenyl succinate, distarch phosphate, monostarch phosphate, phosphated distarch phosphate, starch acetate, and hydroxypropyl distarch phosphate, but is not limited thereto. When the modified starch is used, it is more preferable because it has a more excellent effect of improving the moisture absorption ratio, moisture absorption rate, and moisture release rate aimed at in the present invention, for example, by 10% or more.

When the modified starch and the starch are mixed and used, the starch and the modified starch may be mixed and used in a ratio of 9:1 to 1:9, preferably, in a ratio of 7:3 to 3:7, and, preferably, in a ratio of 6:4 to 4: 6, but is not limited thereto.

According to one aspect of the present invention, the desiccant composition may include 1 to 80 parts by weight of the hygroscopic polymer and 1 to 80 parts by weight of the starch, and specifically, may include 1 to 60 parts by weight of the hygroscopic polymer and 1 to 60 parts by weight of the starch, with respect to 100 parts by weight of the hygroscopic material.

Since the desiccant composition satisfies the above content ranges, the desiccant composition has an advantage of having a low moisture release rate not only in a high temperature and high humidity environment but also in a low temperature and high humidity environment.

According to one aspect of the present invention, the desiccant composition may further include an additive. The additive may include one or more selected from agar, gum arabic, gum karaya, gum carab, gum tragacanth, guar gum, carrageenan, ester gum, gellan gum, glucomannan (konjac), guar gum, locust bean gum, sodium alginate, tamarind gum, tara gum, and xanthan gum, but is not limited thereto. The additive is not limited as long as it achieves the object of the present invention, and may be included in an amount of, for example, 0.1 to 20 parts by weight with respect to 100 parts by weight of the hygroscopic material, but is not limited thereto.

According to one aspect of the present invention, the desiccant composition may have a moisture absorption ratio of 150% or more, specifically, 160% or more, specifically, 180% or more, specifically, 200% or more, specifically, 250% or more, specifically, 300% or more, and specifically, 250 to 320%, when measured at 50°C and 95% relative humidity, but is not limited thereto.

According to one aspect of the present invention, the desiccant composition may have, but is not limited to, a percentage of a moisture release amount to a moisture absorption amount of 60% or less, specifically, 50% or less, and specifically, 40% or less, the moisture release amount being measured at 80°C and 30% relative humidity for 24 hr and the moisture absorption amount being measured at 50°C and 95% relative humidity for 14 days.

According to one aspect of the present invention, a desiccant pack including the desiccant composition and a packaging material for a desiccant including the desiccant composition may be provided.

According to one aspect of the present invention, the packaging material for a desiccant may include a polyester non-woven layer, a breathable polyolefin layer, and a perforated polyolefin-based film layer, the perforated polyolefin-based film may have a plurality of perforations, a Gurley permeability of the packaging material for a desiccant may be 100 to 3,000 seconds, and a moisture permeability of the packaging material for a desiccant may be 500 to 5,000 g/m$^2$·24 hrs. Since the packaging material for a desiccant is used in the desiccant pack, the moisture absorption ratio, the moisture absorption rate, and the moisture release resistance of the desiccant pack are all excellent. The above effect is a remarkable effect realized by the combination of the gel-type desiccant composition and the packaging material for a desiccant, and is not easily realized by the combination with a conventional solidified desiccant.

Specifically, a Gurley permeability (150 ml of air volume) of the packaging material for a desiccant may be 100 to 3,000 seconds, specifically, 300 to 2,000 seconds, and specifically, 500 to 1,500 seconds, but is not limited thereto.

The moisture permeability may be 500 to 5,000 g/m$^2$, specifically, 500 to 4,000 g/m$^2$, specifically, 500 to 3,000 g/m$^2$, specifically, 500 to 2,000 g/m$^2$, specifically, 500 to 1,500 g/m$^2$, and specifically, 600 to 800 g/m$^2$, but is not limited thereto.

Since the packaging material for a desiccant satisfies the above Gurley permeability and moisture permeability, additionally, when combined with the desiccant composition, the packaging material for a desiccant has the advantages of having an excellent moisture absorption ratio and moisture absorption rate while also having excellent moisture release resistance.

The configuration of the packaging material for a desiccant will be described in more detail.

The polyester non-woven layer of the packaging material for a desiccant may include a polyester-based non-woven fabric. The polyester-based non-woven fabric may be woven from a single polyester-based fiber or a blend of a natural fiber or a synthetic fiber and a polyester-based fiber, but is not limited thereto. The natural fiber may be cotton, wool, silk, hemp, or the like, and the synthetic fiber may be a synthetic fiber such as a polyamide fiber or a polyester fiber, but the present invention is not limited thereto. In addition, the polyester-based non-woven fabric may be manufactured by a method such as needle punching, thermal bonding, spun bonding, melt blowing, or spun lacing, but is not limited thereto. In addition, the polyester-based non-woven fabric may have a basis weight of 10 to 60 g/m$^2$, specifically, 15 to 50 g/m$^2$, and specifically, 20 to 40 g/m$^2$, but is not limited thereto. Since the packaging material for a desiccant includes the polyester non-woven fabric satisfying the above basis weight, the packaging material for a desiccant may have the effect of further increasing breathability.

The breathable polyolefin film layer of the packaging material for a desiccant may include a breathable polyolefin film. A material of the breathable polyolefin film may be low-density polyethylene, high-density polyethylene, linear low-density polyethylene, polypropylene, or polybutylene, but is not limited thereto. In addition, the breathable polyolefin film may be manufactured by adding an inorganic filler to the polyolefin resin. The breathable polyolefin film may be manufactured by adding an inorganic filler to a polyolefin resin, manufacturing an extruded sheet, and then stretching the extruded sheet, but the present invention is not limited to the manufacturing method. As the inorganic filler, one or two or more selected from the group consisting of calcium carbonate, talc, clay, kaolin, silica, and diatomaceous earth may be used. An average particle size of the inorganic filler may be selected and used according to the object of the invention, is not limited for moisture permeability, breathability, and mechanical strength, and may be preferably 0.5 to 30 μm, but is not limited thereto. A content thereof may be 20 to 40 parts by weight with respect to 100 parts by weight of the polyethylene resin to improve bending strength, elasticity, and flexibility, but is not limited thereto. The breathable polyolefin film preferably has a basis weight of 10 to 50 g/m$^2$ in order to not tear easily and maintain moisture permeability, waterproofing ability, and air permeability. In addition, the breathable polyolefin film may have properties such as a moisture permeability of 100 to 10,000 g/m$^2$·24 hr, air permeability of 10 to 5,000 sec, and water pressure resistance of 50 to 100 cm/H$_2$O.

According to one aspect of the present invention, the polyurethane-based adhesive may be a polyurethane adhesive derived from a polyester-based polyol and a polyether-based polyol. The polyurethane-based adhesive includes polyether polyol, polyester polyol, an isocyanate-based curing agent, an accelerator, and a solvent, and the polyurethane-based adhesive prepared with the above configuration has excellent breathability effect, unlike general adhesives.

In addition, the perforated polyolefin-based film of the packaging material for a desiccant may be a film obtained by forming 1 to 500 perforations/cm$^2$ in a polyolefin-based film, specifically, a film having 8 to 30 perforations/cm$^2$, and specifically, a film having 10 to 25 perforations/cm$^2$, but is not limited thereto. Since the number of perforations of the perforated polyolefin-based film satisfies the above conditions, the moisture absorption rate of the desiccant including the packaging material for a desiccant may be effectively controlled.

According to one aspect of the present invention, the perforated polyolefin-based film may have an average diameter of the perforations of 0.01 to 2.0 mm, specifically, 0.05 to 1.5 mm, specifically, 0.1 to 1.0 mm, and specifically, 0.3 to 0.5 mm, but is not limited thereto.

According to one aspect of the present invention, the perforated polyolefin-based film may have a perforation rate of 0.1 to 50%, specifically, 0.3 to 40%, specifically, 0.4 to 30%, specifically, 0.4 to 20%, specifically, 0.5 to 10%, and specifically, 0.5 to 5%, but is not limited thereto. In this case, the perforation rate refers to a percentage of the total sum of perforation areas with respect to a unit area. A range of the perforation rate is adjusted within the average diameter range of the perforations, and the moisture absorption rate may be controlled more effectively depending on these combinations.

Since a desiccant pack is manufactured by packaging the desiccant composition with the packaging material, the moisture absorption rate of the moisture absorption product may be effectively controlled. In addition, the moisture absorption product may have excellent durability, and thus, the phenomenon of the desiccant being released to the outside due to an external impact during transportation and storage may be suppressed.

Specifically, the desiccant pack may have a moisture absorption ratio of 200% or more, specifically, 250% or more, specifically, 300% or more, specifically, 250 to 400%, specifically, 270 to 350%, and specifically, 300 to 320%, when measured at 50°C and 95% relative humidity, but is not limited thereto.

In addition, according to one aspect of the present invention, the desiccant pack may have a moisture absorption rate of 3 %/2 hr or more, specifically, 5 %/2 hr or more, specifically, 5 to 15 %/2 hr, specifically, 5 to 10 %/2 hr, and specifically, 5 to 7 %/2 hr, when measured at 50°C and 95% relative humidity, but is not limited thereto.

In addition, according to one aspect of the present invention, the desiccant pack may have, but is not limited to, a percentage of a moisture release amount to a moisture absorption amount of 30% or less, specifically, 20% or less, specifically, 19% or less, and specifically, 0 to 17%, the moisture release amount being measured at 80°C and 30% relative humidity for 24 hr and the moisture absorption amount being measured at 50°C and 95% relative humidity for 14 days.

According to one aspect of the present invention, the desiccant pack may have, but is not limited to, a moisture release amount percentage of 5% or less, specifically, 4% or less, and specifically, 3% or less, when measured at 80°C and 30% relative humidity for 2 hr after absorbing moisture up to 100% under conditions of 40°C and 90% relative humidity, and 40°C and 90% relative humidity.

Hereinafter, the present invention will be described in more detail based on Examples and Comparative Examples. However, the following Examples and Comparative Examples are only examples for describing the present invention in more detail, and the present invention is not limited by the following Examples and Comparative Examples.

<Moisture Absorption Film Performance Evaluation>

1. Gurley Permeability

A time required for 150 ml of air to permeate was measured using a Gurley densometer (KP-M4350, Kipae E&T Co., Ltd.).

2. Tensile Strength

The tensile strength is a value when measured according to ISO 1924-2.

<Moisture Absorption Product Performance Evaluation>

3. Moisture Absorption Ratio

As for the moisture absorption ratio, a moisture absorption ratio of a sample after 14 days under a temperature of $50\pm2$°C and $95\pm5$% relative humidity was measured using a thermohygrostat. The moisture absorption ratio was calculated using the following Equation 1.

[Equation 1]

$$\text{Moisture absorption ratio} = \frac{\text{(Final weight after 14 days of exposure} - \text{Initial weight)}}{\text{Initial weight}} \times 100$$

4. Moisture Absorption Rate

A moisture absorption rate was measured after exposing the sample to a temperature of $50\pm2$°C and $95\pm5$% relative humidity for 2 hours using a thermohygrostat, and the moisture absorption rate was calculated using the following Equation 2.

[Equation 2]

$$\text{Moisture absorption rate}\atop(\%/2\ hr) = \frac{\text{(Final weight after 2 hours of exposure} - \text{Initial weight)}}{\text{Initial weight}} \times 100$$

5. Moisture Release Rate

The sample fully moisture-absorbed at a temperature of 50±2°C and 95±5% relative humidity was exposed to a temperature of 80°C for 2 hours, 24 hours, and 48 hours using a hot air dryer (thermohygrostat) to release moisture, and then, a moisture release rate was measured. The moisture release rate was calculated using the following Equation 3.

[Equation 3]

$$\text{Moisture release rate (\%)} = \frac{(\text{Initial weight of fully moisture-absorbed sample} - \text{Final weight after moisture release})}{\text{Initial weight of fully moisture-absorbed sample}} \times 100$$

<Preparation Example 1> Preparation of Triple-Layered Plain Packaging Material

A polyurethane adhesive was applied to one side of a polyester spunbond non-woven fabric (basis weight 30 g/m$^2$, CAS No. 25038-59-9), and a polypropylene film (CAS No. 9003-07-0) was adhered onto the applied adhesive. Thereafter, a polyurethane adhesive (product of HI-CHEM Co., Ltd.) was applied onto the polypropylene film, and a perforated polypropylene film (CAS No. 9003-07-0, cast PP film, thickness 25 um) having an average of 20 perforations/cm$^2$ was adhered onto the applied adhesive to prepare a triple-layered plain film. The triple-layered plain film was prepared using a dry lamination process.

<Preparation of Desiccant>

<Example 1>

A desiccant was prepared by uniformly mixing 100 parts by weight of magnesium chloride (Aldrich), 40 parts by weight of polyacrylamide-sodium methacrylate (CAS No. 25085-02-03), and 60 parts by weight of starch (corn starch, (Daesang Co.)) as hygroscopic materials using a mixer. 25 g of the prepared desiccant was placed into the triple-layered plain packaging material of Preparation Example 1 to prepare a moisture absorption product. The moisture absorption rate, moisture absorption ratio, and moisture release rate of the prepared moisture absorption product were measured and are shown in Table 1.

<Example 2>

The same procedure as in Example 1 was performed, except that a desiccant was prepared by uniformly mixing 100 parts by weight of magnesium chloride (Aldrich, purity 94%), 60 parts by weight of polyacrylamide-sodium methacrylate (CAS No. 25085-02-03), and 40 parts by weight of starch (corn starch, Daesang Co.) as hygroscopic materials using a mixer. The moisture absorption rate, moisture absorption ratio, and moisture release rate of the prepared moisture absorption product were measured and are shown in Tables 1 and 2.

<Example 3>

The same procedure as in Example 1 was performed, except that a desiccant was prepared by uniformly mixing 100 parts by weight of magnesium chloride (Aldrich), 75 parts by weight of polyacrylamide-sodium methacrylate (CAS No. 25085-02-03), and 75 parts by weight of starch (corn starch, Daesang Co.) as hygroscopic materials using a mixer. The moisture absorption rate, moisture absorption ratio, and moisture release rate of the prepared moisture absorption product were measured and are shown in Table 1.

<Example 4>

A desiccant was prepared by uniformly mixing 100 parts by weight of magnesium chloride (Aldrich, purity 94%), 40 parts by weight of polyacrylamide-sodium methacrylate (CAS No. 25085-02-03), 60 parts by weight of starch (corn starch, Daesang Co.), and 40 parts by weight of magnesium oxide (KONOSHIMA CHEMICAL CO., LTD., STARMAG 50, average particle size 30 μm) as hygroscopic materials using a mixer. 25 g of the prepared desiccant was placed into the triple-layered plain packaging material of Preparation Example 1 to prepare a moisture absorption product. The moisture absorption rate, moisture absorption ratio, and moisture release rate of the prepared moisture absorption product were measured and are shown in Table 1.

<Example 5>

A desiccant was prepared by uniformly mixing 100 parts by weight of magnesium chloride (Aldrich), 40 parts by weight of polyacrylamide-sodium methacrylate (CAS No. 25085-02-03), and 60 parts by weight of hydroxypropyl distarch phosphate (INGREDION INCORPORATED, USA) as hygroscopic materials using a mixer. 25 g of the prepared desiccant was placed into the triple-layered plain packaging material of Preparation Example 1 to prepare a moisture absorption product. The moisture absorption rate, moisture absorption ratio, and moisture release rate of the prepared moisture absorption product were measured and are shown in Table 1.

<Example 6>

A desiccant was prepared by uniformly mixing 100 parts by weight of magnesium chloride (Aldrich, purity 94%), 40 parts by weight of polyacrylamide-sodium methacrylate (CAS No. 25085-02-03), 30 parts by weight of starch (corn starch, Daesang Co.), and 30 parts by weight of hydroxypropyl distarch phosphate (INGREDION INCORPORATED, USA) as hygroscopic materials using a mixer. 25 g of the prepared desiccant was placed into the triple-layered plain packaging material of Preparation Example 1 to prepare a moisture absorption product. The moisture absorption rate, moisture absorption ratio, and moisture release rate of the prepared moisture absorption product were measured and are shown in Table 1.

<Example 7>

A desiccant was prepared by uniformly mixing 100 parts by weight of magnesium chloride (Aldrich, purity 94%), 40 parts by weight of polyacrylamide-sodium methacrylate (CAS No. 25085-02-03), 60 parts by weight of hydroxypropyl distarch phosphate (INGREDION INCORPORATED, USA), and 3 parts by weight of xanthan gum (CAS No.: 11138-66-2) as hygroscopic materials using a mixer. 25 g of the prepared desiccant was placed into the triple-layered plain packaging material of Preparation Example 1 to prepare a moisture absorption product. The moisture absorption rate, moisture absorption ratio, and moisture release rate of the prepared moisture absorption product were measured and are shown in Table 1.

<Example 8>

The same procedure was performed, except that an EVA-coated Tyvek (fabric provided by Dupont) packaging material was used instead of the triple-layered plain packaging material prepared in Example 1. The moisture absorption rate, moisture absorption ratio, and moisture release rate of the prepared moisture absorption product were measured and are shown in Table 2.

<Example 9>

The same procedure was performed, except that an EVA-coated Tyvek (fabric provided by Dupont) packaging material was used instead of the triple-layered plain packaging material prepared in Example 2. The moisture absorption rate, moisture absorption ratio, and moisture release rate of the prepared moisture absorption product were measured and are shown in Table 2.

<Example 10>

A desiccant was prepared by uniformly mixing 100 parts by weight of magnesium chloride (Aldrich), 40 parts by weight of sodium polyacrylate (CAS No. 9003-04-7), and 60 parts by weight of hydroxypropyl distarch phosphate (INGREDION INCORPORATED, USA) as hygroscopic materials using a mixer. 25 g of the prepared desiccant was placed into the triple-layered plain packaging material of Preparation Example 1 to prepare a moisture absorption product. The moisture absorption rate, moisture absorption ratio, and moisture release rate of the prepared moisture absorption product were measured and are shown in Table 1.

<Comparative Example 1>

A desiccant was prepared by uniformly mixing 100 parts by weight of magnesium chloride (Aldrich, purity 94%), 50 parts by weight of polyacrylamide-sodium methacrylate (CAS No. 25085-02-03), and 100 parts by weight of magnesium oxide (KONOSHIMA CHEMICAL CO., LTD., STARMAG 50, average particle size 30 $\mu$m) as hygroscopic materials using a mixer. 25 g of the prepared desiccant was placed into an EVA-coated Tyvek (fabric provided by Dupont) packaging material to prepare a moisture absorption product. The moisture absorption rate, moisture absorption ratio, and moisture release rate of the prepared moisture absorption product were measured and are shown in Table 1.

<Comparative Example 2>

A desiccant was prepared by uniformly mixing 100 parts by weight of magnesium chloride (Aldrich, purity 94%), 100 parts by weight of magnesium oxide (KONOSHIMA CHEMICAL CO., LTD., STARMAG 50, average particle size 30 μm), and 50 parts by weight of PE wax as hygroscopic materials using a mixer. 25 g of the prepared desiccant was placed into an EVA-coated Tyvek (fabric provided by Dupont) packaging material to prepare a moisture absorption product. The moisture absorption rate, moisture absorption ratio, and moisture release rate of the prepared moisture absorption product were measured and are shown in Table 2.

<Comparative Example 3>

The same procedure was performed, except that a triple-layered plain packaging material was used instead of the EVA-coated Tyvek (fabric provided by Dupont) packaging material in Comparative Example 2. The moisture absorption rate, moisture absorption ratio, and moisture release rate of the prepared moisture absorption product were measured and are shown in Table 2.

[Table 1]

| | MgCl₂ | SAP | | Starch | | Mgo | Xanthan gum | PE wax | 50°C, 95% R.H | | | | | State |
| | | PA PM | PA | Starch | Modified starch | | | | Moisture absorption rate (%/2 hr) | Moisture absorption ratio (%) 14 days | Moisture release rate | | | |
| | | | | | | | | | | | 80° C, 30%, 2 hr | 80° C, 30%, 24 hr | 80° C, 30%, 48 hr | |
|---|---|---|---|---|---|---|---|---|---|---|---|---|---|---|
| Example 1 | 100 | 40 | - | 60 | - | - | | | 5.88 | 304.55 | 1.33 | 17.54 | 32.67 | Gel |
| Example 2 | 100 | 60 | - | 40 | - | - | | | 6.33 | 301.09 | 1.24 | 17.39 | 33.75 | Gel |
| Example 3 | 100 | 75 | - | 75 | - | - | | | 5.59 | 262.11 | 1.38 | 18.58 | 36.53 | Gel |
| Example 4 | 100 | 40 | - | 60 | - | 40 | | | 6.50 | 269.1 | 3.5 | 25.15 | 50.52 | Gel |
| Example 5 | 100 | 40 | - | - | 60 | - | | | 6.23 | 310.12 | 1.23 | 17.12 | 30.01 | Gel |
| Example 6 | 100 | 40 | - | 30 | 30 | - | | | 6.9 | 314.10 | 1.12 | 13.56 | 26.96 | Gel |
| Example 7 | 100 | 40 | - | | 60 | - | 3 | | 6.76 | 313.65 | 1.26 | 15.52 | 29.05 | Gel |
| Example 8 | 100 | 40 | - | 60 | - | - | | | 6.6 | 310.36 | 8.56 | 35.5 | 48.5 | Gel |
| Example 9 | 100 | 60 | - | 40 | - | - | | | 6.1 | 306.56 | 7.32 | 33.65 | 47.52 | Gel |
| Example 10 | 100 | - | 40 | - | 60 | - | | | 7.8 | 280.21 | 6.56 | 25.3 | 45.65 | Gel |
| Comparative Example1 | 100 | 50 | - | - | - | 100 | | | 12.81 | 166.88 | 16.04 | 65.21 | 70.21 | Solidified |
| Comparative Example2 | 100 | - | - | - | - | 100 | | 50 | 5.53 | 145.37 | 9.86 | 47.18 | 49.09 | Solidified |
| Comparative Example3 | 100 | - | - | - | - | 100 | | 50 | 5.61 | 151.72 | 10.83 | 49.53 | 52.79 | Solidified |

In all Examples 1 to 3, the moisture release rate under moisture release rate conditions (80°C, 30%, 24 hr) after being fully moisture-absorbed to 95% at 50°C was 20% or less, which was lower than the moisture release rate of each of Comparative Examples 1 to 3. In the case of Examples 1 and 2, it was confirmed that the moisture absorption rate and moisture absorption ratio were similar to those of Examples 8 and 9, but the moisture release rate is rather lower. This is a remarkable effect obtained through the combination of the gel-type desiccant and the triple-layered plain packaging material.

Hereinabove, although the present invention has been described by specific matters, limited embodiments, and the drawings, they have been provided only for assisting in the entire understanding of the present invention. Therefore, the present invention is not limited to the embodiments, and various modifications and changes may be made by those skilled in the art to which the present invention pertains from this description.

Therefore, the spirit of the present invention should not be limited to the described embodiments, but the claims and all modifications equal or equivalent to the claims are intended to fall within the spirit of the present invention.

## Claims

1. A desiccant composition comprising:

   at least one or two or more hygroscopic materials selected from the group consisting of magnesium chloride and sodium carbonate;
   a hygroscopic polymer; and
   starch.

2. The desiccant composition of claim 1, wherein the desiccant composition is gelled when it absorbs moisture.

3. The desiccant composition of claim 1, wherein the desiccant composition includes 1 to 80 parts by weight of the hygroscopic polymer and 1 to 80 parts by weight of the starch with respect to 100 parts by weight of the hygroscopic material.

4. The desiccant composition of claim 1, wherein the hygroscopic polymer is one or two or more selected from a polyacrylic acid metal salt, a polyacrylamide-(meth)acrylic acid copolymer, an ethylene maleic anhydride copolymer, a cellulose-based thickener including cross-linked carboxymethyl cellulose, methyl cellulose, ethyl cellulose, hydroxyethyl cellulose, and hydroxypropyl methyl cellulose, a polyvinyl alcohol copolymer, and cross-linked polyethylene oxide.

5. The desiccant composition of claim 1, wherein the desiccant composition includes a polyacrylamide- (meth) acrylic acid metal salt.

6. The desiccant composition of claim 1, wherein the starch is modified starch or a mixture of modified starch and starch.

7. The desiccant composition of claim 6, wherein the modified starch is one or more selected from acid-hydrolyzed starch and acid-treated starch, including acetylated distarch adipate, acetylated distarch phosphate, starch sodium octenyl succinate, distarch phosphate, monostarch phosphate, phosphated distarch phosphate, starch acetate, and hydroxypropyl distarch phosphate.

8. The desiccant composition of claim 6, wherein when the starch is a mixture of modified starch and starch, a composition ratio thereof is 9:1 to 1:9.

9. The desiccant composition of claim 1, further comprising an additive.

10. The desiccant composition of claim 1, wherein the desiccant composition has a moisture absorption ratio of 150% or more when measured at 50°C and 95% relative humidity.

11. The desiccant composition of claim 1, wherein the desiccant composition has a moisture absorption rate of 2 %/2 hr or more when measured at 50°C and 95% relative humidity.

12. The desiccant composition of claim 1, wherein the desiccant composition has a percentage of a moisture release amount to a moisture absorption amount of 60% or less, the moisture release amount being measured at 80°C and 30% relative humidity for 24 hr and the moisture absorption amount being measured at 50°C and 95% relative humidity for 14 days.

13. A desiccant pack comprising the desiccant composition of any one of claims 1 to 12, and a packaging material for a desiccant including the desiccant composition.

14. The desiccant pack of claim 13, wherein the packaging material for a desiccant includes a polyester non-woven layer, a breathable polyolefin layer, and a perforated polyolefin-based film layer, each of the layers further includes a polyurethane-based adhesive layer, the perforated polyolefin-based film has a plurality of perforations, a Gurley permeability of the packaging material for a desiccant is 100 to 3,000 seconds, and a moisture permeability of the packaging material for a desiccant is 500 to 5,000 g/m$^2$·24 hrs.

15. The desiccant pack of claim 14, wherein the perforated polyolefin-based film is a perforated polyolefin-based film having 1 to 500 perforations/cm$^2$.

16. The desiccant pack of claim 14, wherein the polyurethane-based adhesive is a polyurethane adhesive derived from a polyester-based polyol and a polyether-based polyol.

17. The desiccant pack of claim 13, wherein the desiccant pack has a moisture absorption ratio of 200% or more when measured at 50°C and 95% relative humidity.

18. The desiccant pack of claim 13, wherein the desiccant pack has a moisture absorption rate of 5 %/2 hr or more when measured at 50°C and 95% relative humidity.

19. The desiccant pack of claim 13, wherein the desiccant pack has a percentage of a moisture release amount to a moisture absorption amount of 20% or less, the moisture release amount being measured at 80°C and 30% relative humidity for 24 hr and the moisture absorption amount being measured at 50°C and 95% relative humidity for 14 days.

## INTERNATIONAL SEARCH REPORT

| International application No. |
|---|
| **PCT/KR2023/016327** |

### A. CLASSIFICATION OF SUBJECT MATTER

**B01J 20/28**(2006.01)i; **B01J 20/04**(2006.01)i; **B01J 20/26**(2006.01)i; **B32B 27/12**(2006.01)i; **B32B 3/26**(2006.01)i; **B32B 7/022**(2019.01)i; **B32B 7/023**(2019.01)i; **B32B 27/32**(2006.01)i; **B32B 27/36**(2006.01)i

According to International Patent Classification (IPC) or to both national classification and IPC

### B. FIELDS SEARCHED

Minimum documentation searched (classification system followed by classification symbols)

B01J 20/28(2006.01); B01D 53/26(2006.01); B01D 53/28(2006.01); B01J 20/04(2006.01); B01J 20/30(2006.01); B32B 5/02(2006.01); C08J 9/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 염화마그네슘(magnesium chloride), 탄산나트륨(sodium carbonate), 흡습물질 (hygroscopic material), 흡습성 중합체(hygroscopic polymer), 전분(starch), 흡습제(desiccant)

### C. DOCUMENTS CONSIDERED TO BE RELEVANT

| Category* | Citation of document, with indication, where appropriate, of the relevant passages | Relevant to claim No. |
|---|---|---|
| X | KR 10-2413339 B1 (DESICCANT CO., LTD.) 28 June 2022 (2022-06-28) See claims 1-5; and paragraphs [0009]-[0095]. | 1-13,17-19 |
| Y | | 14-16 |
| Y | KR 10-2413342 B1 (DESICCANT CO., LTD.) 28 June 2022 (2022-06-28) See claims 1-9. | 14-16 |
| A | KR 10-2022-0091893 A (TKENS) 01 July 2022 (2022-07-01) See entire document. | 1-19 |
| A | KR 10-2022-0003926 A (CHAE, Su Youn) 11 January 2022 (2022-01-11) See entire document. | 1-19 |
| A | JP 2005-036121 A (SHIN ETSU POLYMER CO., LTD.) 10 February 2005 (2005-02-10) See entire document. | 1-19 |

| ☐ Further documents are listed in the continuation of Box C. | ☑ See patent family annex. |
|---|---|

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 January 2024** | **22 January 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/016327**

| Patent document cited in search report | | | Publication date (day/month/year) | Patent family member(s) | | | Publication date (day/month/year) |
|---|---|---|---|---|---|---|---|
| KR | 10-2413339 | B1 | 28 June 2022 | KR | 10-2021-0042839 | A | 20 April 2021 |
| KR | 10-2413342 | B1 | 28 June 2022 | KR | 10-2023-0081956 | A | 08 June 2023 |
| | | | | KR | 10-2548315 | B1 | 29 June 2023 |
| KR | 10-2022-0091893 | A | 01 July 2022 | WO | 2022-139274 | A1 | 30 June 2022 |
| KR | 10-2022-0003926 | A | 11 January 2022 | | None | | |
| JP | 2005-036121 | A | 10 February 2005 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *CHEMICAL ABSTRACTS*, 25038-59-9
- *CHEMICAL ABSTRACTS*, 9003-07-0
- *CHEMICAL ABSTRACTS*, 25085-02-03
- *CHEMICAL ABSTRACTS*, 11138-66-2
- *CHEMICAL ABSTRACTS*, 9003-04-7